(19) Europäisches Patentamt
European Patent Office
Office européen des brevets

(11) **EP 3 257 735 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
**B62J 45/411** *(2020.01)*

(21) Anmeldenummer: **17165864.4**

(22) Anmeldetag: **11.04.2017**

(54) **DREHMOMENTERFASSUNGSEINRICHTUNG, ANTRIEB UND FAHRZEUG**

TORQUE DETECTION DEVICE, DRIVE AND VEHICLE

DISPOSITIF DE DÉTECTION DE COUPLE DE ROTATION, ENTRAÎNEMENT ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2016   DE 102016210387**

(43) Veröffentlichungstag der Anmeldung:
**20.12.2017   Patentblatt 2017/51**

(73) Patentinhaber: **Robert Bosch GmbH**
**70442 Stuttgart (DE)**

(72) Erfinder:
• **Hinterkausen, Markus**
  **71696 Moeglingen (DE)**
• **Dukart, Anton**
  **70839 Gerlingen (DE)**

(56) Entgegenhaltungen:
EP-A2- 0 208 892        EP-A2- 1 504 246
CN-U- 202 119 583       DE-A1- 3 737 696
KR-A- 20040 048 730

**Beschreibung**

Stand der Technik

Die vorliegende Erfindung betrifft eine Drehmomenterfassungseinrichtung, einen Antrieb und ein Fahrzeug. Die vorliegende Erfindung betrifft insbesondere eine Drehmomenterfassungseinrichtung zur Erfassung eines auf eine Kurbelwelle eines mit Muskelkraft oder mit Muskelkraft und mit Motorkraft antreibbaren Fahrzeuges, insbesondere eines Fahrrades, Elektrofahrrades, eBikes, Pedelecs oder dergleichen, entlang einer Rotationsachse wirkenden Drehmomentes, einen Antrieb für ein mit Muskelkraft oder mit Muskelkraft und mit Motorkraft antreibbares Fahrzeug, insbesondere ein Fahrrad, Elektrofahrrad, eBike, Pedelec oder dergleichen, und ein mit Muskelkraft oder mit Muskelkraft und mit Motorkraft antreibbares Fahrzeug, ein Fahrrad, Elektrofahrrad, eBike, Pedelec oder dergleichen.

Bei der Überwachung und/oder Steuerung von Antriebseinrichtungen, zum Beispiel im Bereich der Fahrzeugtechnik, ist es oft wünschenswert, das auf eine Welle einer Antriebseinheit wirkende Drehmoment zu erfassen.

Dazu werden herkömmlicherweise oft Drehmomenterfassungseinrichtungen eingesetzt, die mit den mechanischen Verspannungen in der Welle im Zusammenhang stehende Effekte ausnutzen, um so auf den Wert eines auf die Welle wirkenden Drehmomentes schließen zu können. Es werden z.B. Materialien eingesetzt, die von den mechanischen Belastungen abhängige magnetische und/oder elektrische Eigenschaften zeigen. Nachteilig ist dabei die notwendige und aufwendige materielle Modifikation der Welle.

Andererseits sind aktive Sensoren denkbar, die magnetische Felder in die Welle einprägen und aus der von der mechanischen Belastung abhängigen Feldantwort der Welle auf das Drehmoment schließen. Diese aktiven Systeme sind - wie andere auch - apparativ vergleichsweise aufwendig und störanfällig.

Aus der Schrift CN 202 119 583 U ist eine Drehmomentenerfassungseinrichtung mit den Merkmalen der Präambel des Anspruchs 1 bekannt, die mittels eines Wirbelstromelements die Drehung einer Achse erfasst.

Offenbarung der Erfindung

Die erfindungsgemäße Drehmomenterfassungseinrichtung mit den Merkmalen des unabhängigen Anspruches 1 weist demgegenüber den Vorteil auf, dass ein auf eine Welle wirkendes Drehmoment mit einem vergleichsweise geringen apparativen Aufwand und bei geringem Bauvolumen der messenden Komponenten mit hoher Zuverlässigkeit bestimmt werden kann. Dies wird erfindungsgemäß mit den Merkmalen des unabhängigen Anspruches 1 dadurch erreicht, dass eine Drehmomenterfassungseinrichtung geschaffen wird zur Erfassung eines auf eine Welle und insbesondere auf eine Kurbelwelle eines mit Muskelkraft und/oder oder mit Motorkraft antreibbaren Fahrzeuges entlang einer Rotationsachse wirkenden Drehmomentes. Die erfindungsgemäße Drehmomenterfassungseinrichtung ist ausgebildet mit (i) einem Wirbelstromelement, in welchem vom Drehmoment zwischen der Antriebsseite und der Abtriebsseite abhängige elektrische Wirbelströme generierbar sind, und mit (ii) einer Wirbelstromsensoreinheit zur Erfassung von im Wirbelstromelement generierten elektrischen Wirbelströmen. Das Messprinzip des Nachweises von elektrischen Wirbelströmen in einem vorgesehenen Wirbelstromelement ermöglicht den Rückschluss auf das auf eine Welle wirkende Drehmoment mit vergleichsweise geringem apparativen Aufwand bei hoher Zuverlässigkeit und reduziertem Bauraum der eingesetzten messenden Komponenten.

Die Unteransprüche zeigen bevorzugte Weiterbildungen der Erfindung.

Zur besonders zuverlässigen messtechnischen Darstellung des auf eine Welle wirkenden Drehmomentes ist es bei einer vorteilhaften Weiterbildung der erfindungsgemäßen Drehmomenterfassungseinrichtung vorgesehen, dass das Wirbelstromelement mechanisch zwischen einer Antriebsseite und einer Abtriebsseite der Welle oder eines Torsionselements der Welle und drehfest mit der Welle oder dem Torsionselement koppelbar oder gekoppelt ist.

Eine vom Aufbau her besonders einfache Drehmomenterfassungseinrichtung ergibt sich, wenn gemäß der Erfindung das Wirbelstromelement eine erste Schlitzscheibe mit Schlitzen und Stegen und eine zweite Schlitzscheibe mit Schlitzen und Stegen aufweist, wobei die Schlitzscheiben insbesondere als konzentrisch zueinander angeordnete und/oder sich nicht direkt berührende Kreisscheiben ausgebildet sind. Dabei sind die Schlitzscheiben vorzugsweise um die zu Grunde liegende Welle herum anordenbar oder angeordnet und ggf. mit dieser mechanisch koppelbar oder gekoppelt.

Ein besonders hohes Maß an Genauigkeit beim Darstellen und Erfassen des auf die Welle wirkenden Drehmoments ergibt sich, wenn gemäß einer anderen vorteilhaften Weiterbildung der erfindungsgemäßen Drehmomenterfassungseinrichtung die erste Schlitzscheibe mechanisch mit einer der Antriebsseite und der Abtriebsseite und die zweite Schlitzscheibe mechanisch mit der anderen der Antriebsseite und der Abtriebsseite der Welle oder des Torsionselements der Welle koppelbar oder gekoppelt ist.

Dabei kann es vorteilhafterweise zusätzlich vorgesehen sein, dass die Schlitzscheiben in Abhängigkeit vom Drehmoment gegeneinander verdrehbar sind, um ein oder mehrere in Abhängigkeit von der gegenseitigen Verdrehung verschiedengradig überdeckte oder sich verschiedengradig überdeckende Anordnungen von Schlitzen und Stegen auszubilden, welche insbesondere im Bereich verschiedener radialer Abstände von einem Zentrum der Schlitzscheiben ausbildbar oder angeordnet sind.

Gemäß einer anderen Weiterbildung der erfindungsgemäßen Drehmomenterfassungseinrichtung ist es vorgesehen, dass die Wirbelstromsensoreinheit eingerichtet ist und Mittel aufweist, ein magnetisches Wechselfeld zu erzeugen, dem Wirbelstromelement aufzuprägen und im Wirbelstromelement generierte Wirbelströme und/oder Werte zu mindestens einer dafür repräsentativen Messgröße zu erfassen.

Grundsätzlich ist es denkbar, die Wirbelstromsensoreinheit mit einem einzigen Wirbelstromsensorelement auszubilden. Dabei kann das jeweilige Wirbelstromsensorelement eine Spule sein oder aufweisen, die als Erregerspule und/oder als Messspule fungiert. Es können auch eine Erregerspule und eine Messspule separat vorgesehen sein.

Von besonderem Vorteil ist es jedoch, wenn eine Mehrzahl von Wirbelstromsensorelementen in dieser Form ausgebildet ist, weil in diesem Fall die Möglichkeit besteht, jedes Wirbelstromsensorelement jeweils einer bestimmten Anordnung von Schlitzen und Stegen der Schlitzscheiben zuzuordnen.

Dies ist insbesondere dann von Vorteil, wenn durch die Ausgestaltung und Anordnung der Schlitzscheiben in unterschiedlichen radialen Abständen von der Drehachse entsprechende Anordnungen oder Muster von Schlitzen und Stegen durch die Schlitzscheiben ausgebildet werden, welche unterschiedliche gegenseitige Bedeckungsgrade zeigen und damit ein besonders hohes Maß an Diskriminierung unterschiedlicher Torsionswinkel ermöglichen.

Ein besonders kompakter Aufbau stellt sich bei der erfindungsgemäßen Drehmomenterfassungseinrichtung dann ein, wenn gemäß einer anderen Weiterbildung die Wirbelstromsensoreinheit und insbesondere das eine oder die mehreren Wirbelstromsensorelemente als flach strukturierte Kupferelemente und/oder als auf einer Platine strukturierte oder gedruckte Elemente ausgebildet sind und/oder mechanisch vom Wirbelstromelement, der Welle und einem etwaigen Torsionselement entkoppelt und/oder in einem Gehäuse, insbesondere einem Kurbelgehäuse eines Tretlagers ortsfest montiert sind.

Ferner betrifft die vorliegende Erfindung einen ein mit Muskelkraft oder mit Muskelkraft und mit Motorkraft antreibbares Fahrzeug und insbesondere ein Fahrrad, Elektrofahrrad, eBike, Pedelec oder dergleichen, welcher mit einer erfindungsgemäßen Drehmomenterfassungseinrichtung zur Erfassung eines auf eine Welle des Antriebes wirkenden Drehmomentes ausgebildet. Insbesondere ist der Antrieb auf der Grundlage des erfassten Drehmomentes überwachbar und/oder steuerbar.

In einer besonderen Ausgestaltung ist vorgesehen, dass mit der erfindungsgemäßen Drehmomenterfassungseinrichtung die Trittkraft bzw. das dadurch erzeugte Tretdrehmoment des (Zweirad-)Fahrers erfasst wird. Ausgehend von dieser erfassten Tretkraftgröße kann der elektrische Antrieb, der die Vorwärtsbewegung des Fahrzeugs unterstützt oder gänzlich erzeugt, gesteuert bzw. geregelt werden.

Als Antrieb kann beispielsweise der mechanische Aufbau verstanden werden, der es ermöglicht, dass die Fortbewegung sowohl durch die durch den Fahrer aufgebrachte Muskelkraft als auch durch die durch den Motor erzeugte generatorische Antriebskraft erzeugt wird.

In vorteilhafter Weise ist bei einem derartigen Antrieb das Torsionselement insbesondere ein kraft- und/oder drehmomentübertragendes Element, ein Antriebselement und/oder ein Abtriebselement oder weist ein solches auf, insbesondere in Form eines Zahnrades, Planetenstegs oder Planetenträgers eines Planetengetriebes oder dergleichen.

Gemäß einem anderen Aspekt der vorliegenden Erfindung wird ein mit Muskelkraft oder mit Muskelkraft und mit Motorkraft antreibbares Fahrzeug und insbesondere ein Fahrrad, Elektrofahrrad, eBike, Pedelec oder dergleichen geschaffen, welches ausgebildet ist mit mindestens einem Rad und mit einem erfindungsgemäßen Antrieb zum Antreiben des mindestens einen Rades, bei welchem auf der Grundlage des erfassten Drehmomentes der Antrieb überwachbar und/oder steuerbar ist.

Kurzbeschreibung der Figuren

Unter Bezugnahme auf die beigefügten Figuren werden Ausführungsformen der Erfindung im Detail beschrieben:

Figur 1          ist eine schematische Darstellung für ein Beispiel eines Fahrzeugs nach Art eines Elektrofahrrads, bei welchem eine erste Ausführungsform der Erfindung realisiert ist;

Figur 2          ist eine schematische und teilweise geschnittene Seitenansicht einer Ausführungsform der erfindungsgemäßen Drehmomenterfassungseinrichtung im Zusammenhang mit der Verwendung in einem Antrieb.

Figuren 3 und 4     zeigen in schematischer Seitenansicht eine Ausführungsform der erfindungsgemäßen Drehmomenterfassungseinrichtung im Hinblick auf zwei zu unterschiedlichen Drehmomenten gehörigen Zuständen des zu Grunde liegenden zu vermessenden Systems.

Figuren 5, 6 zeigen in schematischer und teilweise geschnittener Seitenansicht andere Ausführungsformen der erfindungsgemäßen Drehmomenterfassungseinrichtung.

Figur 7 zeigt in schematischer Ansicht eine Ausführungsform eines Torsionselements in Form eines Planetenstegs oder -trägers.

Figur 8 ist eine Explosionsdarstellung eines Wirbelstromelements in Form eines Paares von Schlitzscheiben.

Figur 9 zeigt in schematischer Draufsicht Details der Anordnung sich überlagernder Schlitze für das in Figur 8 gezeigte Paar erfindungsgemäß vorgesehener Schlitzscheiben.

Figur 10 ist ein Graph, der den Verlauf von Induktivitäten zweier Sensorspulen einer Drehmomenterfassungseinrichtung gemäß der vorliegenden Erfindung in Abhängigkeit vom Torsionswinkel der zu Grunde liegenden zu vermessenden Welle illustriert.

Bevorzugte Ausführungsformen der Erfindung

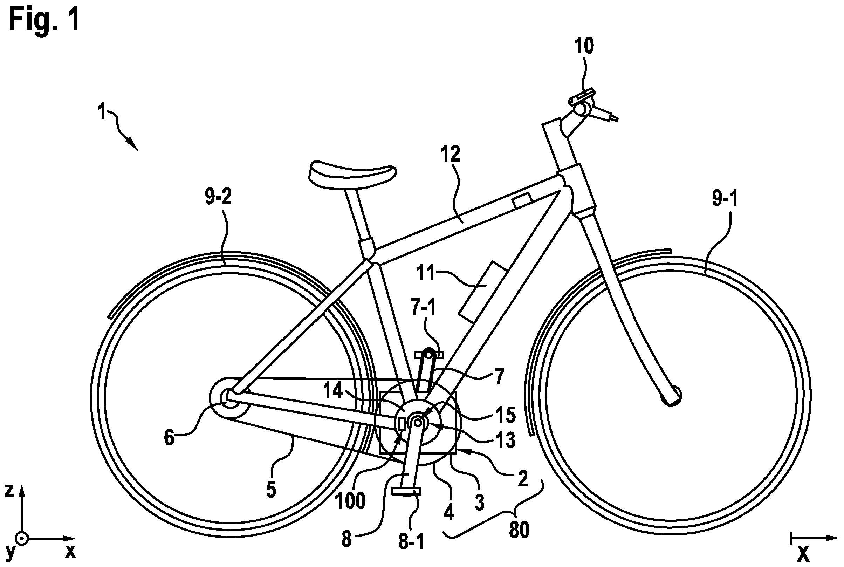

Nachfolgend werden unter Bezugnahme auf die Figuren 1 bis 10 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Im Bereich des Kurbelgehäuses 14 und in der Nähe der Kurbelwelle 15 ist eine Ausführungsform der erfindungsgemäßen Drehmomenterfassungseinrichtung 100 ausgebildet.

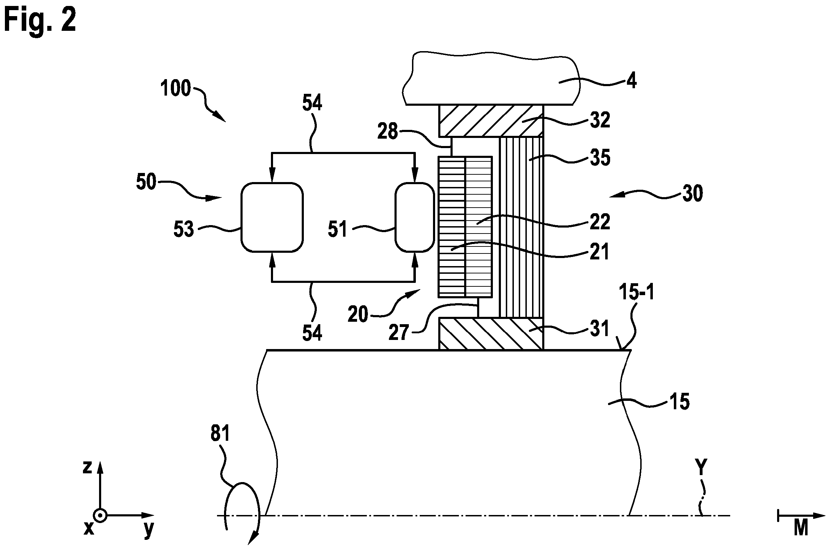

Der geometrische und messtechnische Zusammenhang zwischen der Drehmomenterfassungseinrichtung 100 und einer zu vermessenden Kurbelwelle 15 wird nachfolgend unter Bezugnahme auf die weitergehenden Figuren 2 bis 10 erläutert.

Es ist vorab noch festzuhalten, dass das von der Drehmomenterfassungseinrichtung 100 erfasste und ggf. auch bewertete Signal im Zusammenhang mit einem auftretenden Drehmoment oder Torsionsmoment an der Welle 15 auch verwendet werden kann, um im Zusammenwirken mit der Steuereinheit 10 die Kraft- und Momentübertragung auf Grund der Fahrerbetätigung und/oder auf Grund des elektrischen Antriebs 3 und deren Verhältnisse zu regeln.

Figur 2 zeigt in schematischer und teilweise geschnittener Darstellung eine Ausführungsform der erfindungsgemäßen Drehmomenterfassungseinrichtung 100 in einer Situation vergleichbar zu derjenigen, wie sie in Figur 1 dargestellt ist. Die Drehmomenterfassungseinrichtung 100 wird hier bei einer Kurbelwelle 15 verwendet, welche zur Drehung um die Rotationsachse Y mit einem Drehmoment M beaufschlagt wird.

Zur Darstellung des auf die Welle 15 wirkenden Drehmomentes M ist ein so genanntes Torsionselement 30 ausgebildet, welches mit einer antriebsseitigen Anbindung 31 an der Außenumfangsfläche 15-1 der Kurbelwelle 15 und mit einer abtriebsseitigen Anbindung 32 an einem allgemeinen Abtriebselement 4 angebracht ist.

Diese Konstellation ist nicht zwingend, solange das Torsionselement 30 mit dem Torsionskörper 35 und den Anbindungen 31 und 32 nur zwischen einem Antriebsbereich oder Antriebspunkt einerseits und einem Abtriebsbereich oder Abtriebspunkt andererseits gekoppelt ist, so dass mit dem Moment M in Zusammenhang stehende weitergehende Momente oder Kräfte auf den Torsionskörper 35 des Torsionselements 30 einwirken können.

Auf Grund dieser Einwirkung des Moments M auf den Torsionskörper 35 des Torsionselements 30 werden die Anbindungen 31 und 32 relativ zueinander verschoben. Das Maß dieser Verschiebung ist repräsentativ für das wirkende Moment M und abhängig von den elastischen Parametern des Torsionskörpers 35 des Torsionselements 30.

Zur Darstellung der relativen Verschiebung der Anbindungen 31 und 32 und damit zur Darstellung des wirkenden Drehmoments M ist mit diesen Anbindungen 31 und 32 über entsprechende Anbindungen 27 und 28 ein Wirbelstromelement 20 mechanisch gekoppelt.

In der Ausführungsform gemäß Figur 2 besteht das Wirbelstromelement 20 aus einer ersten Schlitzscheibe 21 und einer zweiten Schlitzscheibe 22. Die Schlitzscheiben 21, 22 sind mechanisch nicht direkt miteinander verbunden und somit gegeneinander mechanisch verschieblich oder verdrehbar.

Die erste Schlitzscheibe 21 ist über eine abtriebsseitige Anbindung 28 mit dem Abtriebselement 4 oder zumindest mit der abtriebsseitigen Anbindung 32 des Torsionselements 30 verbunden.

Die zweite Schlitzscheibe 22 ist über eine antriebsseitige Anbindung 27 entweder direkt mit der Welle 15 oder der antriebsseitigen Anbindung 31 des Torsionselements 30 verbunden.

Im Betrieb wird durch eine momentenbedingte Verschiebung der Anbindungen 31 und 32 des Torsionselements 30 eine Verschiebung oder Verdrehung der Schlitzscheiben 21 und 22 gegeneinander bewirkt.

Diese Verschiebung kann messtechnisch wie folgt erfasst und genutzt werden:
In unmittelbarer räumlicher Nachbarschaft aber doch räumlich getrennt vom Wirbelstromelement 20 mit den ersten und zweiten Schlitzscheiben 21 und 22 ist eine Wirbelstromsensoreinheit 50 mit einem Wirbelstromsensorelement 51 über Steuer- und Messleitungen 54 in Verbindung mit einer Steuer- und Auswerteeinheit 53 vorgesehen. Die Wirbelstromsensoreinheit 50 ist dazu ausgebildet, über das Wirbelstromsensorelement 51 oder ggf. über eine zusätzliche Erregereinheit dem Wirbelstromelement 20 ein magnetisches Wechselfeld aufzuprägen. Durch entsprechende Wechselwirkung der Anordnung aus erster und zweiter Schlitzscheibe 21, 22 des Wirbelstromelements 20, insbesondere unter Drehbewegung entsprechend dem Pfeil 81, werden - eine geeignete Materialwahl der Schlitzscheiben 21 und 22 vorausgesetzt - in dem Wirbelstromelement 20 Wirbelströme erzeugt, welche gemäß der Lenzschen Regel zu einem dem aufgeprägten magnetischen Wechselfeld des Wirbelstromsensorelements 51 entgegengesetzten Feld führen. Diese Gegenreaktion kann durch das Wirbelstromsensorelement 51 oder ggf. durch eine separat vorgesehene Messeinrichtung erfasst werden und ist abhängig von der Konstellation der sich überlagernden Schlitzscheiben 21 und 22 und mithin von deren Stellung relativ zueinander. Über eine entsprechende Ausgestaltung der Geometrie der Schlitzscheiben 21 und 22 kann somit auf Grund der Messung der mit den induzierten Wirbelströmen im Zusammenhang stehenden magnetischen Gegenfelder auf die Stärke des wirksam gewordenen Drehmoments M geschlossen werden.

Gemäß der Anordnung in Figur 2 ist die Rotationsachse Y der Welle 15 parallel zur y-Richtung ausgebildet. Die gesamte Anordnung aus Welle 15, Torsionselement 30, Wirbelstromelement 20 und Abtriebselement 4 ist rotationssymmetrisch zur Rotationsachse Y der Welle 15 ausgebildet. Über die Anbindungen 27 und 28 ist das Wirbelstromelement 20 drehfest mit dem Torsionselement 30 und somit drehfest mit der Welle 15 verbunden. Gegenüber einer Drehung dieser Anordnung ist die Wirbelstromsensoreinheit 50 entkoppelt ausgebildet. Sie dreht sich also nicht mit, sondern ist starr angeordnet, z.B. an einem Bereich des Kurbelgehäuses 14 aus Figur 1.

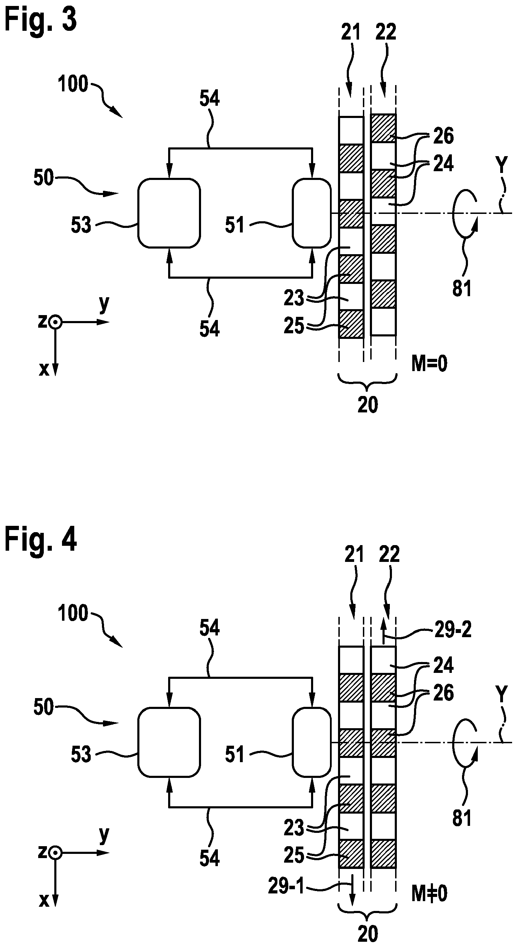

Die Figuren 3 und 4 zeigen in schematischer und teilweise geschnittener Seitenansicht eine Ausführungsform der erfindungsgemäßen Drehmomenterfassungseinrichtung 100 mit einer Wirbelstromsensoreinheit 50 zum Erfassen eines Zustands eines Wirbelstromelements 20 in Kopplung mit einer zu Grunde liegenden Kombination aus Welle 15, Torsionselement 30 und Abtriebselement 4 und im Zusammenhang mit zwei unterschiedlichen Drehmomentsituationen, nämlich mit einem verschwindenden auf die Welle 15 wirkenden Drehmoment $M = 0$ und einem nicht verschwindenden Drehmoment $M \neq 0$, das auf die Welle 15 wirkt.

Im Schnitt zeigt die erste Schlitzscheibe 21 des Wirbelstromelements 20 eine Abfolge von Schlitzen 23 und von Stegen 25. Entsprechend zeigt die zweite Schlitzscheibe 22 eine alternierende Abfolge von Schlitzen 24 und Stegen 26.

In der in Figur 3 gezeigten Anordnung koinzidieren direkt benachbart zum Wirbelstromsensorelement 51 der Wirbelstromsensoreinheit 50 ein Steg 25 der ersten Schlitzscheibe 21 und ein Schlitz 24 der zweiten Schlitzscheibe 22. Bei einer Drehung in Pfeilrichtung 81 um die Rotationsachse Y ergibt sich eine Abfolge von Wirbelstromsignalen, die hervorgerufen werden durch die Kombination aus Steg 25 und Schlitz 24 bzw. aus Schlitz 23 und Steg 26 der ersten und zweiten Schlitzscheiben 21 und 22, sofern ein verschwindendes Drehmoment an der Welle 15 anliegt.

Figur 4 zeigt einen Zustand derselben Drehmomenterfassungseinrichtung 100 bei einem von Null verschiedenen Drehmoment $M \neq 0$. Auf Grund der mit der Torsion des Torsionskörpers 35 des Torsionselements 30 zusammenhängenden Kräftepaares mit Kräften 29-1 und 29-2 werden die ersten und zweiten

Schlitzscheiben 21, 22 des Wirbelstromelements 20 relativ zueinander lokal verschoben oder insgesamt verdreht, so dass nunmehr die Stege 25 und 26 bzw. die Schlitze 23 und 24 mit dem Wirbelstromsensorelement 51 der Wirbelstromsensoreinheit 50 zur Anlage kommen. Diese Anordnung von Schlitz 23 mit Schlitz 24 oder von Steg 25 mit Steg 26 liefert ein gegenüber der Konstellation gemäß Figur 3 verändertes Signal und damit einen Hinweis auf das wirksam gewordene Drehmoment $M \neq 0$.

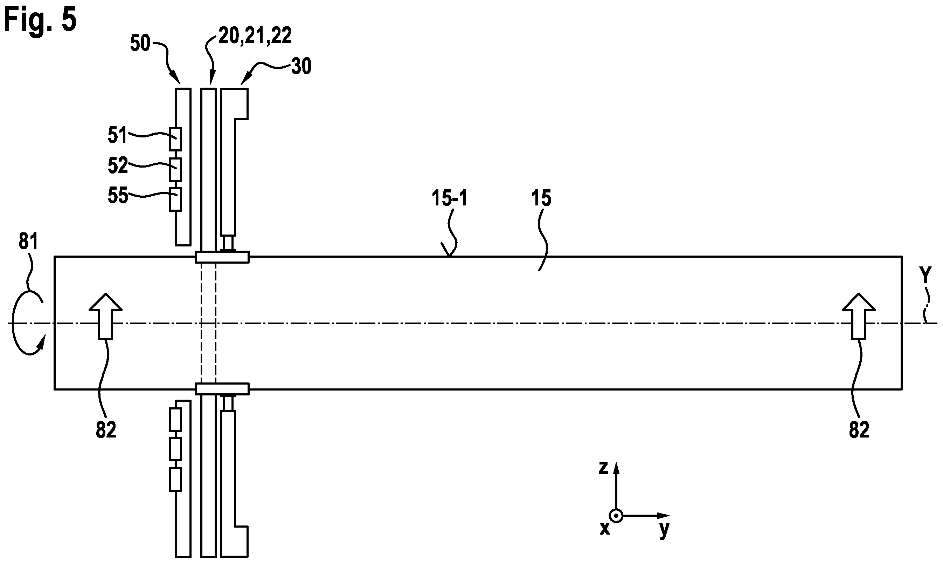

Figur 5 zeigt eine alternative Anordnung für Ausführungsform der erfindungsgemäßen Drehmomenterfassungseinrichtung 100 im Zusammenhang mit einer mit einem Drehmoment M beaufschlagbaren Welle 15, an deren Außenumfangsfläche 15-1 ein Torsionselement 30 und in Kopplung mit diesem ein Wirbelstromelement 20 mit zueinander beweglichen ersten und zweiten Schlitzscheiben 21 und 22 ausgebildet ist.

Von der Drehung der Welle 15, des Wirbelstromelements 20 und des Torsionselements 30 entkoppelt ist eine Wirbelstromsensoreinrichtung 50 mit einem ersten, zweiten und einem dritten Wirbelstromsensorelementen 51, 52 bzw. 55 ausgebildet.

Während das erste und zweite Wirbelstromsensorelement 51 bzw. 52 der Erfassung entsprechender Wirbelstromsignale aus unterschiedlichen Bereichen der Kombinationen von Schlitzen 23, 24 und Stegen 25, 26 in unterschiedlich radial beabstandeten Bereichen relativ zur Rotationsachse Y dienen, kann das dritte Wirbelstromsensorelement 55 z.B. als Drehrichtungs-, Drehwinkel- oder Drehzahlsensor fungieren.

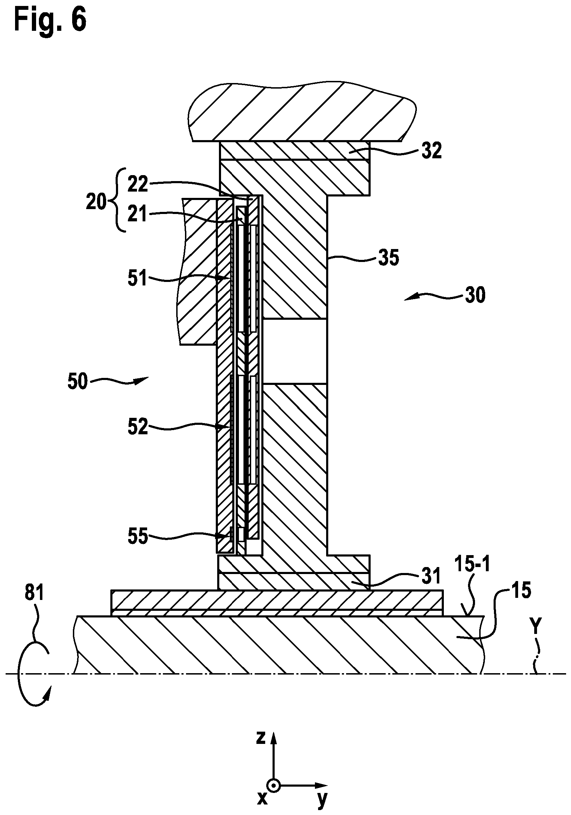

Figur 6 zeigt in größerem Detail eine Ausführungsform der erfindungsgemäßen Drehmomenterfassungseinrichtung 100, die derjenigen aus Figur 5 ähnlich ist.

Unter Verwendung antriebsseitiger und abtriebsseitiger Anbindungen 31 bzw. 32 ist ein Torsionselement 30 mit Torsionskörper 35 zwischen der Welle 15 und deren Außenumfangsfläche 15-1 einerseits und einem Abtriebselement 4 andererseits ausgebildet. Des Weiteren ist in Anbindung an den antriebsseitigen Teil des Torsionskörpers 35 und an den abtriebsseitigen Teil des Torsionskörpers 35 eine erste bzw. eine zweite Schlitzscheibe 21 bzw. 22 eines Wirbelstromelements 20 angekoppelt ausgebildet. Die Schlitzscheiben 21 und 22 sind mechanisch nicht direkt miteinander gekoppelt und somit gegeneinander verdrehbar und/oder lokal verschiebbar.

In unmittelbarer axialer Nachbarschaft zur ersten Schlitzscheibe 21 ist eine Ausführungsform der erfindungsgemäßen Wirbelstromsensoreinheit 50 mit einem ersten, zweiten und dritten Stromsensorelement 51, 52 bzw. 55 ausgebildet. Das erste Wirbelstromsensorelement 51 und das zweite Wirbelstromsensorelement 52 dienen der Detektion von Wirbelströmen im Zusammenhang mit einer Konfiguration aus Schlitzen 23, 24 und Stegen 25, 26 der ersten und zweiten Schlitzscheiben 21 und 22. Das dritte Wirbelstromsensorelement 55 dient dagegen der Detektion eines Verdrehwinkels und ggf. der Stellung und der Drehzahl der Welle 15 oder zumindest des Torsionselements 30 im Raum.

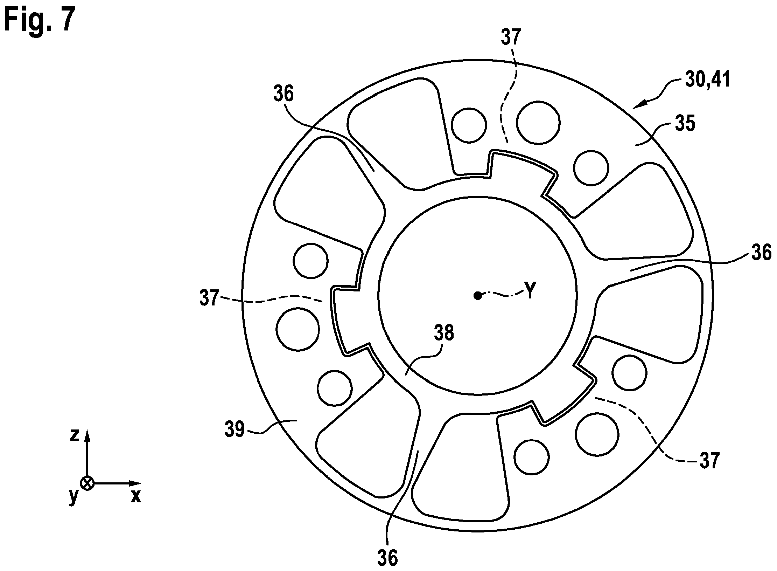

Figur 7 zeigt in schematischer Seitenansicht ein Torsionselement 30 mit einem Torsionskörper 35, hier in Form eines Planetenträgers oder Planetenstegs 41, an welchem eine erste und eine zweite Schlitzscheiben 21 und 22 eines Wirbelstromelements 20 anbringbar sind.

Zur Darstellung der Torsion beim Einwirken eines Drehmoments M weist das Torsionselement 30 eine Torsionsfeder 36 auf, die unter Torsionslast elastisch deformierbar ist und somit eine Verdrehung des inneren Rings 38 des Torsionselements 30 gegenüber dem äußeren Ring 39 des Torsionselements 30 solange ermöglicht, bis der Lastschutz oder Anschlag 37 wirksam wird, indem sich die Lastschutzelemente 37-1 und 37-2 tangential gegeneinander abstützen, sobald ein bestimmtes Maß an Verformung der Torsionsfedern 36 und somit ein bestimmtes Höchstmaß an Drehmoment M überschritten ist.

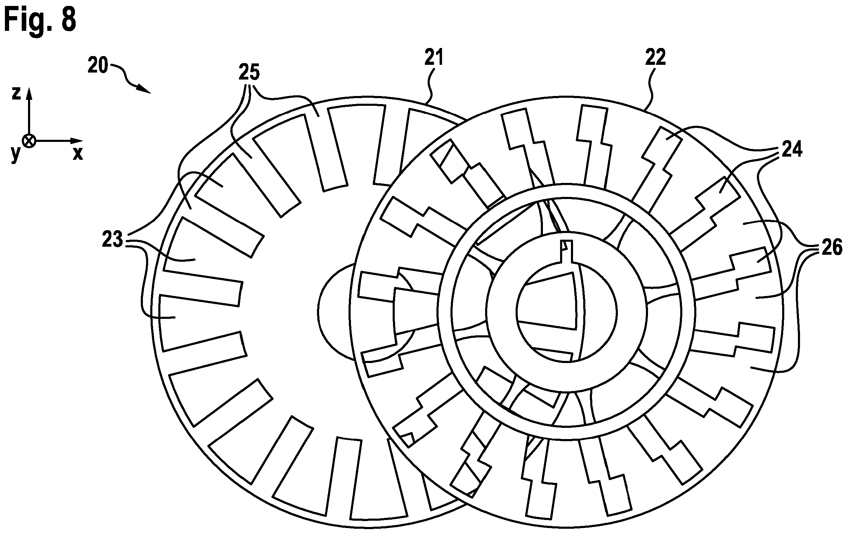

Figur 8 zeigt nach Art einer Explosionsdarstellung eine Ausführungsform eines Wirbelstromelements 20 mit einer ersten Schlitzscheibe 21 mit Schlitzen 23 und Stegen 25 und einer zweiten Schlitzscheibe 22 mit Schlitzen 24 und Stegen 26.

Die Schlitze 23 und 24 und die Stege 25 und 26 sind so ausgebildet und zueinander angeordnet, dass unterschiedliche Verdrehungen der Schlitzscheiben 21 und 22 gegeneinander, hervorgerufen durch unterschiedliche Drehmomente M, zu unterschiedlichen gegenseitigen Bedeckungen oder Koinzidenzen der Schlitze 23, 24 einerseits und der Stege 25, 26 andererseits führen. Auf Grund der Materialwahl für Schlitzscheiben 21, 22 und insbesondere der Stege 25, 26 führt eine Koinzidenz oder Überlappung von Stegen 25, 26 zu einer erhöhten, das Magnetfeld beeinflussenden Materialstärke. Demgegenüber führt ein Koinzidenz von Schlitzen 23, 24 zu einer erniedrigten oder gar verschwindenden Materialstärke an das Magnetfeld beeinflussendem Material. Eine entsprechende graduelle Überdeckung führt demgemäß zu einer graduell unterschiedlichen Beeinflussung des aufgeprägten Magnetfeldes. Die Messung dieser graduellen Unterschiede führt zum Maß für das wirksam werdende Drehmoment M.

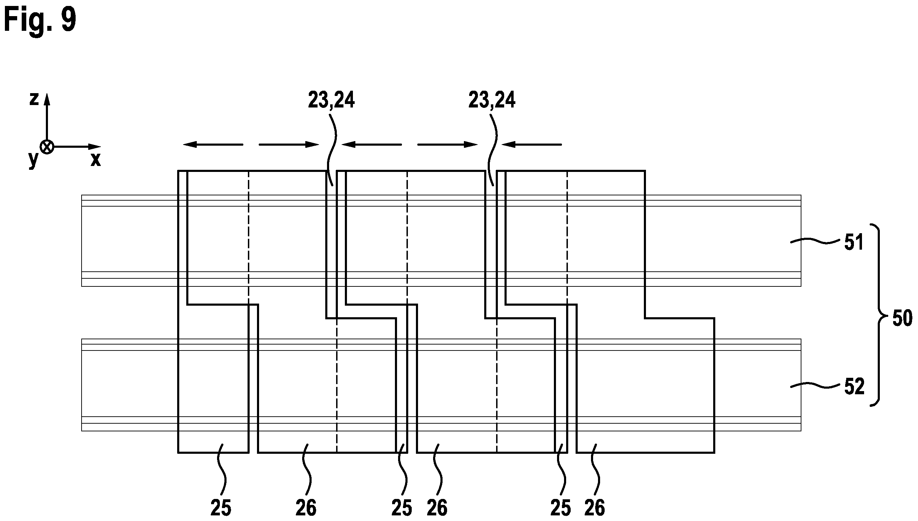

In Figur 9 sind in schematischer Seitenansicht Details der sich teilweise überdeckenden Stege 25 und 26 und Schlitze 23, 24 der Schlitzscheiben 21, 22 des Wirbelstromelements 20 dargestellt.

In messtechnischer Hinsicht lassen sich die verwendeten Wirbelstromsensorelemente 51, 52 und insbesondere deren zu Grunde liegende Spulen mit ihrer Eigeninduktivität im Zusammenhang mit den werdenden Stegen 24, 26 als Induktivitäten auffassen, die in Abhängigkeit vom Torsionswinkel und der damit einhergehenden graduell unterschiedlichen Koinzidenz oder Überlappung der Stege 25, 26 und Schlitze 23, 24 zu unterschiedlichen Gesamtinduktivitäten $L_1$ bzw. $L_2$ führen.

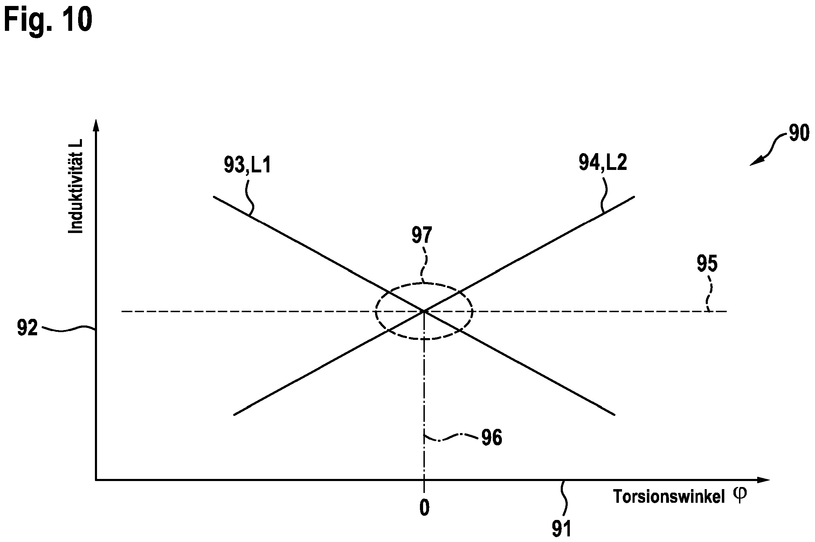

Figur 10 zeigt nach Art eines Graphen 90 mit auf der Abszisse 91 aufgetragenem Torsionswinkel $\varphi$ und auf der Ordinate 92 aufgetragener Gesamtinduktivität L, nämlich der Induktivität $L_1$ bzw. $L_2$ für das erste bzw. das zweite Wirbelstromsensorelement 51, 52, in den Spuren 93 und 94 den Torsionswinkel Torsionswinkel $\varphi$ abhängigen Verlauf der Induktivitäten $L_1$ und $L_2$. In dem betrachteten Bereich ist jede der Gesamtinduktivitäten $L_1$ und $L_2$ auf Grund der Wahl der Geometrie und Ausrichtung der Schlitze 23 und Stege 25, 26 der ersten Schlitzscheibe 21 und der zweiten Schlitzscheibe 22 des Wirbelstromelements 20 in Bezug aufeinander vom Torsionswinkel $\varphi$ linear abhängig, wobei sich eine übereinstimmende Induktivität $L_1 = L_2$ im Bereich 97 des Schnittpunkts ergibt, der durch die Referenzlinien 95 und 96 angedeutet ist und der mit dem Torsionswinkel $\varphi = 0$ korrespondiert.

Diese und weitere Merkmale und Eigenschaften der vorliegenden Erfindung werden an Hand der folgenden Darlegungen weiter erläutert:
Die Erfindung betrifft insbesondere auch Elektrofahrräder, Pedelecs, eBikes und dergleichen, welche insbesondere mit einem Mittelmotor ausgebildet sein können und/oder welche zur Steuerung der Motorunterstützung eine Fahrerwunschsensierung aufweisen.

Dazu wird neben der Drehzahl und Drehrichtung vor allem das von der Trittkraft des Fahrers ausgehende Drehmoment M auf die Kurbelwelle 15 gemessen. Es wird das Gesamtdrehmoment aus der Summe der Trittkraft vom linken und rechten Pedal ermittelt. Bekannt sind z.B. berührungslose Messverfahren in der Tretlagereinheit. Während Drehzahl und Drehrichtung über einen Hallsensor erfasst werden, erfolgt die Messung des Drehmoments häufig durch ein magnetoelastisches Verfahren. Diese Verfahren der Drehmomentdetektion sind häufig zu sensitiv, teuer, komplex und erfordern Bauraum um die Kurbelwelle durch die Verwendung einer zur Kurbelwelle koaxialen Drehmomenthülse.

Eine direkte Messung der durch Torsionsbeanspruchung in der Drehmomenthülse hervorgerufenen elastischen Verformung ist beispielsweise durch Oberflächenwellensensoren möglich. Hierfür ist ebenfalls eine koaxial zur Kurbelwelle angebrachte Messwelle bzw. Drehmomenthülse erforderlich.

Weitere bekannte Messverfahren zur Drehmomentdetektion sind Verfahren, welche den Federweg, der durch ein zusätzliches Getriebe zur Wandlung der vom Fahrer ausgehenden Drehzahl und des vom Fahrer ausgehenden Drehmoments auftritt, zur Detektion ausnutzen. Vorteilhaft ist dabei der Ersatz einer einfachen Kraftmessung. Nachteilig sind dabei der zusätzlich erforderliche Bauraum, das zusätzliche Gewicht, der schlechtere Gesamtwirkungsgrad und die zusätzliche Geräuschquelle.

Es sind auch eBike-Tretlagerantriebe mit integriertem Fahrradschaltgetriebe bekannt. Derartige Antriebe können häufig auf Grund des Bauraumbedarfs herkömmlicher Drehmomentmessverfahren nicht mehr mit diesen ausgestattet werden.

Die Erfindung hat unter anderem auch die Aufgabe, das durch die Trittkraft des Fahrers auf die Kurbelwelle 15 aufgebrachte Drehmoment M zu detektieren. Insbesondere soll ein Drehmomentsensor 50 in einem eBike- oder Pedelec-Tretlagerantrieb 80 mit integriertem Fahrradschaltgetriebe realisiert werden.

Die Erfindung löst die gestellte Aufgabe auch durch den Einsatz eines Wirbelstromschlitzscheibensensors, z. B. mit planaren Platinenspulen an einem mit der Tretkurbelwelle 15 des eBike- oder Pedelec-Tretlagerantriebs 80 drehfest verbundenen Planetenträgers 41 einer Planetengetriebestufe. Hierdurch ist es möglich, einen Drehmomentsensor 50 in senkrechter Anordnung zur Tretkurbelwelle 15 und damit geringer axialer Ausdehnung in Richtung der Tretkurbelwelle 15 anzubringen.

Prinzip der Messung des Drehmoments M mittels Wirbelstrom und Planetenträger 41 ist das Induzieren eines Wirbelstroms in gehäusefesten planaren Platinenspulen 51, 52 durch Torsionsbeanspruchung im Planetenträger 41 hervorgerufenen elastischen Verformung, welche zu einer Relativdrehbewegung der beiden mit dem Planetenträger 41 verbundenen Schlitzscheiben 21, 22 führt.

Dabei ist die linke Schlitzscheibe 21 z.B. in Figur 6 mit der Kurbelwelle 15 verbunden. Die rechte Schlitzscheibe 22 ist mit dem Außenrand des Torsionselements 30 verbunden. Beide Schlitzscheiben 21, 22 rotieren mit der Drehzahl der Kurbelwelle 15. Die Verdrehung der Schlitzscheiben 21, 22 zueinander ist proportional zum Drehmoment M und der Steifigkeit der linearen Torsionsfeder 26.

Die Torsionsfeder 26 gemäß Figur 7 ist vorteilhafterweise so ausgeführt, dass der Messbereich abgedeckt ist. Außerhalb des Messbereiches greift ein mechanischer Überlastschutz 37, der für positive und negative Drehmomente M durch die Überlastspaltweite einstellbar ist. Die Festigkeit und die Überlastfähigkeit der Struktur bleiben somit erhalten.

Die Schlitzscheiben 21, 22 sind vorzugsweise aus einem guten elektrischen Leiter hergestellt und so strukturiert, dass die Schlitze 23, 24 in der Ruhelage geschlossen sind. Verdrehen sich die Scheiben 21, 22 auf Grund eines positiven Drehmoments M zueinander, so nimmt der Schlitz der oberen Segmente zu und der Schlitz der unteren Schlitzsegmente wird noch stärker überdeckt. Bei Drehmomenten in negative Richtung ist es genau umgekehrt, wie dies auch aus den Figuren 8 und 9 ersichtlich ist.

Die beiden Spulen 51, 52 können auf der Sensorseite der Platine als flache strukturierte Kupferspule ausgeführt und mittels einer einfachen Elektronik mit einer Wechselspannung beaufschlagt werden.

Die ortsfest mit dem Gehäuse 14 verbundenen Spulen 51, 52 induzieren ein Magnetfeld, welches mit den Schlitzscheiben 21, 22 interagiert. Das Spulenmagnetfeld durchdringt die Scheiben 21, 22 und wird durch induzierte Wirbelströme geschwächt. Die Eigeninduktivität der Spulen wird durch die Wirbelströme in den Scheiben verringert oder auch vergrößert in Abhängigkeit der Schlitzbreite, wie dies im Zusammenhang mit Figur 10 erläutert ist.

Die Schlitze 23, 24 können mit einer dritten angepassten Spule 53 als Inkrement abgetastet werden. Dadurch steht neben dem Drehmomentsensor auch die inkrementeller Winkel zur Verfügung, der auch einen Indexierung aufweist. Damit sind der absolute inkrementelle Winkel, die Drehzahl und das Drehmoment als Mess- oder Bussignal verfügbar.

Die Kennlinie errechnet sich aus der Halbbrückenverschaltung der Einzelinduktivitäten.

Das Drehmoment errechnet sich gemäß Figur 10 dann aus dem Zusammen hang (1)

$$M = C \cdot L1/(L1+L2). \tag{1}$$

Die Temperatur und die Abstandsabhängigkeit sind, solange sich diese gleich auf die einzelnen Induktivitäten auswirken, durch die Quotientenbildung intrinsisch eliminiert. Dies gilt jedoch nur für einen begrenzten Abstandsbereich.

Die Erfindung kann überall dort eingesetzt werden, wo ein Drehmoment auf Basis einer Torsion z.B. eines Planetenträgers 41 gemessen werden soll. Insbesondere ist das Messverfahren für Tretlagerantriebe 80 mit integriertem Fahrradschaltgetriebe geeignet, um beispielsweise die Tretkraft bzw. das vom Fahrer erzeugte Tretdrehmoment zu erfassen. Die Erfindung kann in einer zukünftigen Generation des eBike-Antriebs eingesetzt werden.

**Patentansprüche**

1. Drehmomenterfassungseinrichtung (100) zur Erfassung eines auf eine Kurbelwelle (15) eines mit Muskelkraft oder mit Muskelkraft und mit Motorkraft antreibbaren Fahrzeuges (1) entlang einer Rotationsachse (Y) wirkenden Drehmomentes (M),
mit:

   - einem Wirbelstromelement (20), in welchem vom Drehmoment zwischen der Antriebsseite und der Abtriebsseite abhängige elektrische Wirbelströme generierbar sind, und
   - einer Wirbelstromsensoreinheit (50) zur Erfassung von im Wirbelstromelement (20) generierten elektrischen Wirbelströmen,
   - bei welchem das Wirbelstromelement (20) eine erste Schlitzscheibe (21) mit Schlitzen (23) und Stegen (25) und eine zweite Schlitzscheibe (22) mit Schlitzen (24) und Stegen (26) aufweist,
   - wobei die Schlitzscheiben (21, 22) als konzentrisch zueinander angeordnete und/oder sich nicht direkt berührende Kreisscheiben ausgebildet sind.

2. Drehmomenterfassungseinrichtung (100) nach Anspruch 1,
bei welchem das Wirbelstromelement (20) mechanisch zwischen einer Antriebsseite und einer Abtriebsseite der Welle (15) oder eines Torsionselements (30) der Welle (15) und drehfest mit der Welle (15) oder dem Torsionselement (30) koppelbar oder gekoppelt ist.

3. Drehmomenterfassungseinrichtung (100) nach einem der vorhergehenden Ansprüche, bei welcher

   - die erste Schlitzscheibe (21) mechanisch mit einer der Antriebsseite und der Abtriebsseite und die zweite Schlitzscheibe (21) mechanisch mit der anderen der Antriebsseite und der Abtriebsseite der Welle (15) oder des Torsionselements (30) der Welle (15) koppelbar oder gekoppelt ist und
   - insbesondere die Schlitzscheiben (21, 22) in Abhängigkeit vom Drehmoment gegeneinander verdrehbar sind, um ein oder mehrere in Abhängigkeit von der gegenseitigen Verdrehung verschiedengradig überdeckte Anordnungen von Schlitzen (23, 24) und Stegen (25, 26) auszubilden, welche insbesondere im Bereich verschiedener radialer Abstände von einem Zentrum der Schlitzscheiben (21, 22) ausbildbar sind.

4. Drehmomenterfassungseinrichtung (100) nach einem der vorangehenden Ansprüche,
bei welcher die Wirbelstromsensoreinheit (50) eingerichtet ist, ein magnetisches Wechselfeld zu erzeugen, dem Wirbelstromelement (30) aufzuprägen und im Wirbelstromelement (30) generierte Wirbelströme und/oder Werte zu mindestens einer dafür repräsentativen Messgröße zu erfassen.

5. Drehmomenterfassungseinrichtung (100) nach einem der vorangehenden Ansprüche, bei welcher

   - die Wirbelstromsensoreinheit (50) ein oder mehrere Wirbelstromsensorelemente (51, 52) - insbesondere in Form von Erreger- und/oder Messspulen - aufweist und
   - jedes Wirbelstromelement (51, 52) insbesondere jeweils einer bestimmten Anordnung von Schlitzen (23, 24) und Stegen (25, 26) der Schlitzscheiben (21, 22) zugeordnet ist.

6. Drehmomenterfassungseinrichtung (100) nach einem der vorangehenden Ansprüche,
bei welcher die Wirbelstromsensoreinheit (50) und insbesondere das eine oder die mehreren Wirbelstromsensorelemente (51, 52)

- als flach strukturierte Kupferelemente und/oder als auf einer Platine strukturierte oder gedruckte Elemente ausgebildet sind und/oder
- mechanisch vom Wirbelstromelement (20), der Welle (15) und einem etwaigen Torsionselement (30) entkoppelt und/oder
- in einem Gehäuse, insbesondere einem Kurbelgehäuse (14) eines Tretlagers ortsfest montiert sind.

**7.** Antrieb (80) für ein mit Muskelkraft oder mit Muskelkraft und mit Motorkraft antreibbares Fahrzeug (1), insbesondere Fahrrad, Elektrofahrrad, eBike, Pedelec oder dergleichen,

- mit einer Drehmomenterfassungseinrichtung (100) nach einem der Ansprüche 1 bis 6 zur Erfassung eines auf eine Welle (15) des Antriebes (80) wirkenden Drehmomentes,
- bei welchem insbesondere auf der Grundlage des erfassten Drehmomentes der Antrieb (80) überwachbar und/oder steuerbar ist.

**8.** Antrieb (80) nach Anspruch 7,
bei welchem das Torsionselement (30) ein kraft- und/oder drehmomentübertragendes Element, ein Antriebselement und/oder ein Abtriebselement ist oder aufweist, insbesondere ein Zahnrad, einen Planetensteg (41), einen Planetenträger (41) eines Planetengetriebes oder dergleichen.

**9.** Mit Muskelkraft oder mit Muskelkraft und mit Motorkraft antreibbares Fahrzeug (1),
insbesondere Fahrrad, Elektrofahrrad, eBike, Pedelec oder dergleichen, mit:

- mindestens einem Rad (9-1, 9-2),
- einem Antrieb (80) nach Anspruch 7 oder 8 zum Antreiben des mindestens einen Rades (9-1, 9-2),

bei welchem auf der Grundlage des erfassten Drehmomentes der Antrieb (80) überwachbar und/oder steuerbar ist.

## Claims

**1.** Torque detection device (100) for the detection of a torque (M) which acts along a rotational axis (Y) on a shaft (15) of a vehicle (1) which can be driven by way of muscle power or by way of muscle power and by way of motorized power, with:

- an eddy current element (20), in which electric eddy currents which are dependent on the torque between the drive side and the output side can be generated, and
- an eddy current sensor unit (50) for the detection of electric eddy currents which are generated in the eddy current element (20),
- in the case of which the eddy current element (20) has a first slotted disc (21) with slots (23) and webs (25), and a second slotted disc (22) with slots (24) and webs (26),
- the slotted discs (21, 22) being configured as circular discs which are arranged concentrically with respect to one another and/or do not make contact directly with one another.

**2.** Torque detection device (100) according to Claim 1, in the case of which the eddy current element (20) can be coupled or is coupled mechanically between a drive side and an output side of the shaft (15) or of a torsion element (30) of the shaft (15) and fixedly to the shaft (15) or the torsion element (30) so as to rotate with it.

**3.** Torque detection device (100) according to either of the preceding claims, in the case of which

- the first slotted disc (21) can be coupled or is coupled mechanically to one of the drive side and the output side, and the second slotted disc (21) can be coupled or is coupled mechanically to the other one of the drive side and the output side of the shaft (15) or of the torsion element (30) of the shaft (15), and,
- in particular, the slotted discs (21, 22) can be rotated with respect to one another in a manner which is dependent on the torque, in order to configure one or more arrangements of slots (23, 24) and webs (25, 26), which arrangements are overlapped to different degrees in a manner which is dependent on the mutual rotation, and which arrangements can be configured, in particular, in the region of various radial spacings from a centre of the slotted discs (21, 22).

**4.** Torque detection device (100) according to one of the preceding claims,
in the case of which the eddy current sensor unit (50) is set up to generate an alternating magnetic field, to impart it to the eddy current element (30), and to detect values and/or eddy currents which are generated in the eddy current element (30) to form at least one measured variable which is representative of them.

**5.** Torque detection device (100) according to one of the preceding claims, in the case of which

- the eddy current sensor unit (50) has one or more eddy current sensor elements (51, 52), in particular in the form of exciter and/or measuring coils, and
- each eddy current element (51, 52) is assigned, in particular, to in each case one defined arrangement of slots (23, 24) and webs (25, 26) of the slotted discs (21, 22).

**6.** Torque detection device (100) according to one of the preceding claims,
in the case of which the eddy current sensor unit (50) and, in particular, the one or plurality of eddy current sensor elements (51, 52)

- are configured as flatly structured copper elements and/or as elements which are printed or structured on a board, and/or
- are decoupled mechanically from the eddy current element (20), the shaft (15) and any torsion element (30), and/or
- are mounted in a stationary manner in a housing, in particular a crankcase (14) of a bottom bracket bearing.

**7.** Drive (80) for a vehicle (1) which can be driven by way of muscle power or by way of muscle power and by way of motorized power, in particular bicycle, electric bicycle, e-bike, pedelec or the like,

- with a torque detection device (100) according to one of Claims 1 to 6 for the detection of a torque which acts on a shaft (15) of the drive (80),
- in the case of which the drive (80) can be monitored and/or controlled, in particular, on the basis of the detected torque.

**8.** Drive (80) according to Claim 7,
in the case of which the torsion element (30) is or has a force-transmitting and/or torque-transmitting element, a drive element and/or an output element, in particular a gearwheel, a planet spider (41), a planetary carrier (41) of a planetary gear mechanism or the like.

**9.** Vehicle (1) which can be driven by way of muscle power or by way of muscle power and by way of motorized power, in particular bicycle, electric bicycle, e-bike, pedelec or the like, with:

- at least one wheel (9-1, 9-2),
- a drive (80) according to Claim 7 or 8 for driving the at least one wheel (9-1, 9-2),

in the case of which the drive (80) can be monitored and/or controlled on the basis of the detected torque.

**Revendications**

**1.** Dispositif de détection de couple (100) pour détecter un couple (M) agissant le long d'un axe de rotation (Y) sur une manivelle (15) d'un véhicule (1) pouvant être entraîné par la force musculaire ou par la force musculaire et la force d'un moteur,
comprenant :

- un élément à courants de Foucault (20) dans lequel des courants de Foucault électriques, dépendant du couple entre le côté entraînement et le côté sortie, peuvent être produits, et
- une unité de capteur à courants de Foucault (50) pour détecter des courants de Foucault électriques produits dans l'élément à courants de Foucault (20),
- dans lequel l'élément à courants de Foucault (20) présente une première rondelle rainurée (21) munie de rainures (23) et de nervures (25) et une deuxième rondelle rainurée (22) munie de rainures (24) et de nervures (26),

- dans lequel les rondelles rainurées (21, 22) sont réalisées comme des disques circulaires disposés de manière concentrique les uns par rapport aux autres et/ou comme des disques circulaires qui ne se touchent pas directement.

2. Dispositif de détection de couple (100) selon la revendication 1, dans lequel l'élément à courants de Foucault (20) peut être ou est couplé mécaniquement entre un côté entraînement et un côté sortie de l'arbre (15) ou d'un élément de torsion (30) de l'arbre (15) et peut être ou est couplé à l'arbre (15) ou à l'élément de torsion (30) de manière verrouillée en rotation.

3. Dispositif de détection de couple (100) selon l'une quelconque des revendications précédentes, dans lequel

   - la première rondelle rainurée (21) peut être ou est couplée mécaniquement à l'un du côté entraînement et du côté sortie, et la deuxième rondelle rainurée (21) peut être ou est couplée mécaniquement à l'autre du côté entraînement et du côté sortie de l'arbre (15) ou de l'élément de torsion (30) de l'arbre (15), et
   - en particulier les rondelles rainurées (21, 22) peuvent tourner l'une par rapport à l'autre en fonction du couple afin de réaliser un ou plusieurs agencements de rainures (23, 24) et de nervures (25, 26) se chevauchant à différents degrés en fonction de la rotation mutuelle, lesdits agencements étant réalisables en particulier dans la plage de différentes distances radiales par rapport à un centre des rondelles rainurées (21, 22).

4. Dispositif de détection de couple (100) selon l'une quelconque des revendications précédentes, dans lequel l'unité de capteur à courants de Foucault (50) est aménagée pour produire un champ magnétique alternatif, pour l'appliquer à l'élément à courants de Foucault (30) et pour détecter dans l'élément à courants de Foucault (30) des courants de Foucault produits et/ou des valeurs d'au moins une grandeur mesurée les représentant.

5. Dispositif de détection de couple (100) selon l'une quelconque des revendications précédentes, dans lequel

   - l'unité de capteur à courants de Foucault (50) présente un ou plusieurs éléments de capteur à courants de Foucault (51, 52), en particulier sous la forme de bobines d'excitation et/ou de mesure, et
   - chaque élément à courants de Foucault (51, 52) est attribué en particulier respectivement à un certain agencement de rainures (23, 24) et de nervures (25, 26) des rondelles rainurées (21, 22).

6. Dispositif de détection de couple (100) selon l'une quelconque des revendications précédentes, dans lequel l'unité de capteur à courants de Foucault (50) et en particulier les un ou plusieurs éléments de capteur à courants de Foucault (51, 52)

   - sont réalisés sous forme d'éléments de cuivre structurés plats et/ou sous forme d'éléments structurés ou imprimés sur une platine, et/ou
   - sont découplés mécaniquement de l'élément à courants de Foucault (20), de l'arbre (15) et d'un élément de torsion (30) éventuel, et/ou
   - sont montés de manière fixe dans un carter, en particulier un carter de manivelle (14) d'un pédalier.

7. Entraînement (80) pour un véhicule (1) pouvant être entraîné par la force musculaire ou par la force musculaire et la force d'un moteur, en particulier un vélo, un vélo électrique, un e-bike, un pedelec ou similaires,

   - comprenant un dispositif de détection de couple (100) selon l'une quelconque des revendications 1 à 6 pour détecter un couple agissant sur un arbre (15) de l'entraînement (80),
   - dans lequel l'entraînement (80) peut être surveillé et/ou commandé en particulier sur la base du couple détecté.

8. Entraînement (80) selon la revendication 7, dans lequel l'élément de torsion (30) est ou présente un élément de transmission de force et/ou de couple, un élément d'entraînement et/ou un élément de sortie, en particulier un pignon, un croisillon planétaire (41), un porte-satellites (41) d'un engrenage planétaire ou similaires.

9. Véhicule (1) pouvant être entraîné par la force musculaire ou par la force musculaire et la force d'un moteur, en particulier un vélo, un vélo électrique, un e-bike, un pedelec ou similaires, comprenant :

   - au moins une roue (9-1, 9-2),
   - un entraînement (80) selon la revendication 7 ou 8 pour entraîner ladite au moins une roue (9-1, 9-2),

l'entraînement (80) pouvant être surveillé et/ou commandé sur la base du couple détecté.

**Fig. 1**

# Fig. 2

# Fig. 3

# Fig. 4

Fig. 5

EP 3 257 735 B1

# Fig. 6

Fig. 7

Fig. 8

Fig. 9

# Fig. 10

EP 3 257 735 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 202119583 U